Europäisches Patentamt

European Patent Office

Office européen des brevets

(11) Publication number: **0 068 837**
A1

# EUROPEAN PATENT APPLICATION

(21) Application number: **82303317.0**

(51) Int. Cl.³: **H 01 M 2/12**

(22) Date of filing: **25.06.82**

(30) Priority: **29.06.81 US 278724**

(43) Date of publication of application: **05.01.83**
Bulletin 83/1

(84) Designated Contracting States: **CH DE FR GB LI**

(71) Applicant: **UNION CARBIDE CORPORATION, Old Ridgebury Road, Danbury Connecticut 06817 (US)**

(72) Inventor: **Peterson, Gordon Edward, 14317 Birchwood Avenue, Cleveland Ohio 44111 (US)**

(74) Representative: **McCall, John Douglas et al, W.P. THOMPSON & CO. Coopers Building Church Street, Liverpool L1 3AB (GB)**

(54) **Electrochemical cell.**

(57) There is disclosed an electrochemical cell in which the active components of the cell are assembled within a housing comprising a container sealed at its open end by a cover and having at least one vent orifice in said housing, characterised in that a sheet is disposed over the at least one vent orifice and is secured and sealed about said vent orifice using a low temperature fusible material such that upon being exposed to a predetermined temperature level the fusible material will melt producing a permanent vent through the at least one orifice in the cell container. Thus there is provided a safety, non-resealable temperature sensitive vent for galvanic cells.

- 1 -

DESCRIPTION

"ELECTROCHEMICAL CELL"

This invention relates to electrochemical cells and in particular to a safety, non-resealable vent for galvanic cells, such as nonaqueous cells.

In the past, several different types of pressure relief vent valves have been used for releasing internal gas pressure from inside a sealed galvanic cell. Devices such as safety valves, rupture membranes, shearing plugs, sharp points which are forced through sheets, etc. have been employed. Recently low pressure relief vents have been disclosed using glass-to-metal and ceramic-to-metal hermetic seals which crack after a low pressure buildup occurs within a cell. Although pressure venting devices are available to safety vent pressurized materials from within sealed cells, there are not many devices that quickly and safely vent when cells are exposed to high temperature environments, such as when they are discarded into incinerators. Consequently, cells having suitable high or low pressure relief vent valves when placed in incinerators may not have enough time for the vent to properly function and thus could result in some of the cells detonating. This is particularly true of some of the newer cells systems as for example nonaqueous cell systems employing liquid cathode material such as oxyhalides.

One type of temperature sensitive vent which is designed for use as a one time safety device, consists of a plug of a material sensitive to high temperatures which is placed in a preformed aperture and melts upon exposure to a high temperature condition. However, these temperature sensitive devices are generally difficult to assemble on a production basis.

It is therefore, an object of the present invention to provide, in an electrochemical cell, a safety non-

- 2 -

resealable vent closure that is actuated upon being exposed to a high temperature environment.

According to the present invention there is provided an electrochemical cell in which the active components of the cell are assembled within a housing comprising a container sealed at its open end by a cover and having at least one vent orifice in said housing and a sheet disposed over the vent orifice and secured and sealed about said vent orifice using a low temperature fusible material such that upon being exposed to a predetermined temperature level the fusible material will melt providing a permanent vent in the cell container.

By use of the present invention there may be provided a safety non-resealable temperature sensitive vent means that is inexpensive to manufacture, easy to assemble and compact.

If desired the sheet could be preattached by a partial or spot weld and then fully sealed by the fusible material.

Preferably the sheet could be a disc disposed and secured and sealed over an orifice positioned at the bottom of a cylindrical cell.

As used herein a low temperature fusible material is one that is capable of providing a hermetic seal for the sheet with the cell's housing and melting at a temperature above $190^{\circ}F$. Preferably, the material should melt below $300^{\circ}F$ and above $200^{\circ}F$ for most applications. The selection of the particular fusible material will depend upon what temperature the material is required to melt, along with, its chemical compatibility with the particular cell system it is to be used with and along with its ability to wet the materials of the sheet and housing. Suitable fusible materials would include metal alloys such as bismuth-lead containing alloys, bismuth-tin containing alloys, bismuth-cadmium containing

- 3 -

alloys, and the like as generally known in the art; and high temperature plastics, e.g. polyimide and the like.

In the preferred embodiment of the invention, at least one vent orifice would be placed at the bottom of a cylindrical container of a cell and then a disc would be secured and hermetically sealed over the orifice using a low melting point fusible material such as a bismuth-lead alloy. Thus when the cell is inadvertently exposed to a high temperature environment as exists in an incinerator, the fusible material will melt and provide a permanent vent in the cell thus possibly preventing the cell from detonating.

The sheet for use in this invention could be selected from materials such as stainless steel, nickel, steel, tin coated steels, etc. and could assume any irregular or regular configuration such as a circle, square, etc.

The safety non-resealable temperature sensitive vent closure of this invention preferably can be employed with all size cells and is ideally suited for liquid cathode cell systems employing, for example, a liquid oxyhalide. A cell for use in this invention can be the split internal anode/outer cathode collector construction as described in U.S. Patent 4,032,696 or the split internal cathode collector constructed as described in U.S. Patent 4,048,389, said U.S. Patents 4,032,696 and 4,048,389 being incorporated herein by reference.

Suitable nonaqueous liquid cathode materials for use in cells of this invention could be one or more of the liquid oxyhalides of an element of Group V or Group VI of the Periodic Table and/or one or more of the halides of an element of Group IV to Group VI of the Periodic Table, said Periodic Table being the Periodic Table of Elements as set forth on the inside back cover of the Handbook of Chemistry and Physics, 48th Edition. The

0068837

- 4 -

Chemical Rubber Co., Cleveland, Ohio, 1967-1968. For example, such nonaqueous cathode materials would include sulfuryl chloride, thionyl chloride, phosphorus oxy-chloride, thionyl bromide, chromyl chloride, vanadyl tribromide, selenium oxy-chloride, sulfur monochloride, sulfur monobromide, selenium tetrafluoride, selenium monobromide, thiophosphoryl chloride, thiophosphoryl bromide, vanadium pentafluoride, lead tetrachloride, titanium tetrachloride, disulfur decafluoride, tin bromide trichloride, tin dibromide dichloride and tin tribromide chloride. Another suitable cathode material would be liquid sulfur dioxide.

Anodes suitable for use in nonaqueous liquid cathode cell systems can be generally consumable metals and include the alkali metals, alkaline earth metals and alloys of alkali metals or alkaline earth metals with each other and other metals. The term "alloy" as used herein is intended to include mixtures; solid solutions such as lithium-magnesium; and intermetallic compounds such as lithium monoaluminide. The preferred anode materials are the alkali metals and particularly lithium, sodium and potassium. When using lithium anodes the anode may be coated with a vinyl resin as disclosed in U.S. Patent 3,993,501, said patent incorporated herein by reference.

The cathode collector for use in liquid cathode cell systems has to be electronically conductive so as to permit external electrical contact to be made with the active cathode material and also provide extended area reaction sites for the cathodic electrochemical process of the cell. Materials suitable for use as a cathode collector are carbon materials and metals such as nickel, with acetylene black being preferable. In addition, the cathode collector when made of a particulate material should be capable of being molded directly within a can or capable of being molded into various size discrete bodies that can be handled without cracking or breaking. To impart a cohesive characteristic to some types of cathode collectors, such as carbonaceous cathode collectors, a suitable binder material, with or without plasticizers and with or without stabilizers, can be added to the cathode collector materials. Suitable binder materials for this purpose may include vinyl polymers, polyethylene, polypropylene, polyacrylics, polystyrene and the like. For example, polytetrafluoroethylene would be the preferred binder for cathode collectors for use with liquid oxyhalide cathodes. The binder, if required, should be added in an amount between about 5% and about 30% by weight of the molded cathode collector since an amount less than 5% would not provide sufficient strength to the molded body while an amount larger than 30% would wet-proof the surface of the carbon and/or reduce the available surface of the carbon, thereby reducing the activation site areas required for the cathodic electrochemical process of the cell. Preferably, the binder should be between 10% and 25% by weight of the cathode collector. Of importance in selecting the materials for the cathode collector is to select materials that will be chemically stable in the cell system in which they are to be used.

A solute for use in liquid cathode cell systems may be a simple or double salt which will produce an ionically conductive solution when dissolved is a suitable solvent. Preferred solutes for nonaqueous systems are complexes of inorganic or organic Lewis acids and inorganic ionizable salts. The only requirements for utility are that the salt, whether simple or complex, be compatible with the solvent being employed and that it yield a solution which is ionically conductive.

- 6 -

According to the Lewis or electronic concept of acids and bases, many substances which contain no active hydrogen can act as acids or acceptors of electron doublets. The basic concept is set forth in the chemical literature (Journal of the Franklin Institute, Vol. 226, July/December, 1938, pages 293,313 by G.N. Lewis).

A suggested reaction mechanism for the manner in which these complexes function in a solvent is described in detail in U.S. Patent 3,542,602 wherein it is suggested that the complex or double salt formed between the Lewis acid and the ionizable salt yields an entity which is more stable than either of the components alone.

Typical Lewis acids suitable for use in conjunction with liquid oxyhalide cathodes include aluminum fluoride, aluminum bromide, aluminum chloride, antimony pentachloride, zirconium tetrachloride, phosphorus pentachloride, boron fluoride, boron chloride and boron bromide.

Ionizable salts useful in combination with the Lewis acids include lithium fluoride, lithium chloride, lithium bromide, lithium sulfide, sodium fluoride, sodium chloride, sodium bromide, potassium fluoride, potassium chlorice and potassium bromide.

It will be obvious to those skilled in the art that the double salts formed by a Lewis acid and an ionizable salt may be used as such or the individual components may be added to the solvent separately to form the salt or the resulting ions in situ. Cne such double salt, for example, is that formed by the combination of aluminum chloride and lithium chloride to yield lithium aluminum tetrachloride.

If desired, and specifically for the halides, a cosolvent should be added to the liquid active reducible cathode and solute solution to alter the dielectric constant, viscosity or solvent properties of the solution to achieve better conductivity. Some examples of suitable cosolvents are nitrobenzene, tetrahydrofuran, 1,3-dioxolane, 3-methyl-2-oxazolidone, propylene carbonate, $\gamma$-butyrolactone, sulfolane, ethylene glycol sulfite, dimethyl sulfite, benzolyl chloride, dimethoxyethane, dimethyl isoxazole, diethyl carbonate, sulfur dioxide and the like.

Suitable separators for use with liquid cathodes in nonaqueous cells suitable for use in nonaqueous liquid cathode cell systems are the nonwoven glass separators, preferably those separators that incorporate long glass fibers along with the short glass fibers since such a combination increases the tear strength of the separators thereby making them easier to handle.

The container of the cell could be made of stainless steel, iron, nickel, plastic, coated metals or some other suitable material.

Some preferred combinations of nonaqueous cathode materials and anodes would be as follows:

1) sulfuryl chloride/Li or Na;
2) thionyl chloride/Li or Na;
3) phosphorus oxychloride/Li or Na;
4) sulfur monochloride/Li or Na;
5) sulfur monobromide/Li or Na;
6) selenium tetrafluoride/Li or Na;

Preferably, the cells for use in this invention would be liquid oxyhalide cells using sulfuryl chloride, thionyl chloride or mixtures thereof with a lithium anode.

It is to be understood that the safety vent closure of this invention could be used in other cell systems such as, for example, Leclanche dry cells, zinc chloride cells, lithium-$MnO_2$ cells, nickel-cadmium cells, and lead-acid cells.

- 8 -

The present invention will become more apparent from the following description thereof when considered together with the accompanying drawing which is set forth as being exemplary of embodiments of the present invention and is not intended in any way to be limitative thereof and wherein.

Figure 1 is a perspective view of disc for use in this invention.

Figure 2 is a perspective view of a cell container inverted so that the bottom of the container is shown with a vent orifice disposed at its center.

Figure 3 is a partial cross-sectional view of the container shown in Figure 2 with the disc shown in Figure 1 secured and sealed over the vent orifice using a low melting point fusible material.

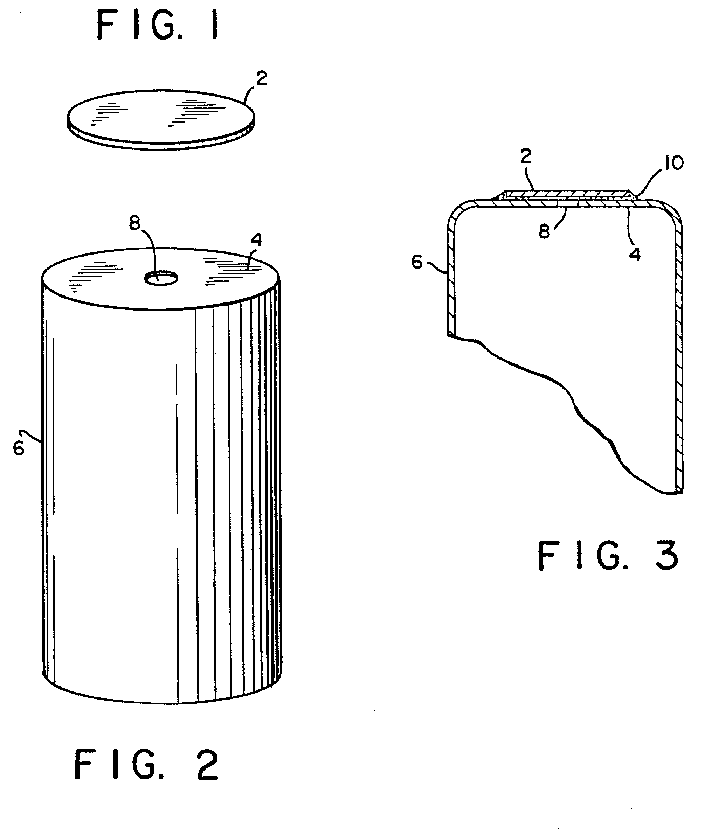

Referring in detail to Figures 1 through 3, a disc 2 is secured and sealed to the bottom 4 of container 6 over vent orifice 8 using a fusible material 10 such as a low temperature fusible metal alloy. If desired, the disc could be secured and sealed within the container for some applications. Thus when the container 6 houses a cell system such as lithium/oxyhalide system, and is exposed to a high temperature environment as exists in an incinerator, the fusible material will melt producing a permanent vent in the cell. This may prevent possible detonation of some cells when exposed to high temperature condition.

The invention will now be further described by reference to the following examples.

Example 1

Fusible metal alloys were prepared as shown in the table. The approximate melting point of the fusible metal alloys are also shown in the table.

- 9 -

### Table

| Fusible Metal alloys<br>Percent by Weight | Melting Point<br>($^o$F) |
|---|---|
| 50% Bismuth - 25% lead - 25% Cadmium | 210$^o$ |
| 60% Lead - 40% Tin | 360$^o$ to 460$^o$ |
| 55% Bismuth - 45% Lead | 256$^o$ |
| 60% Bismuth - 40% Cadmium | 291$^o$ |
| 57% Bismuth - 43% Tin | 281$^o$ |
| 52% Bismuth - 32% Lead - 16% Tin | 203$^o$ |

### Example 2

Some oxyhalide/lithium cells were constructed using a cylindrical container closed at its open end by a cover. A vent orifice was disposed at the center of the bottom of the container and a tin-plated steel disc was secured and sealed over the orifice using for some cells, a 57% by weight bismuth and 43% by weight tin fusible alloy and for other cells a 52% by weight bismuth, 32% by weight lead and 16% by weight tin fusible alloy along with a conventional flux. Some cells of each type were subjected to an abuse test of a two ampere charge and they vented through the bottom orifice without detonating. Some cells of each type were heated by a direct flame and venting occurred depending on the location of the flame. If the flame was directed near the bottom, the cell vented through the bottom orifice. However, if the flame was directed against the side or top of the cell, the cell detonated. In a sand bath test where the entire cells were exposed to a high temperature, the cells generally vented through the bottom orifice but one cell denoted for some unexplained reason.

It is to be understood that although the present invention has been described with reference to particular

-10-

details thereof, it is not intended that these details shall be construed as limiting the scope of this invention.

- 11 -

CLAIMS

1. An electrochemical cell in which the active components of the cell are assembled within a housing comprising a container sealed at its open end by a cover and having at least one vent orifice in said housing, characterised in that a sheet is disposed over the at least one vent orifice and is secured and sealed about said vent orifice using a low temperature fusible material such that upon being exposed to a predetermined temperature level the fusible material will melt producing a permanent vent through the at least one orifice in the cell container.

2. An electrochemical cell as claimed in claim 1, characterised in that the fusible material is a metal alloy having a melting point above $190^{\circ}F$.

3. An electrochemical cell as claimed in claim 1 or 2, characterised in that the fusible material is a bismuth-containing alloy.

4. An electrochemical cell as claimed in any one of the preceding claims, characterised in that the fusible material is selected from the group consisting of bismuth-lead alloy, bismuth-lead-cadmium alloy, bismuth-cadmium alloy, bismuth-tin alloy and bismuth-lead-tin alloy.

5. An electrochemical cell as claimed in any one of the preceding claims, characterised in that the vent orifice is disposed in the bottom of the container.

6. An electrochemical cell as claimed in any one of the preceding claims, characterised in that the sheet is made from a material selected from stainless steel or nickel or tin coated steel.

7. An electrochemical cell as claimed in any one of the preceding claims, characterised in that it employs a cathode-electrolyte which contains  at least

0068837

- 12 -

one liquid oxyhalide selected from the group consisting
of thionyl chloride, sulfuryl chloride, phosphorous
oxychloride, thionyl bromide, chromyl chloride, vanadyl
tribromide and selenium oxychloride.

8.    An electrochemical cell as claimed in any one
of the preceding claims, characterised in that it employs
an anode of lithium, sodium, calcium, potassium or
aluminum.

# FIG. 1

# FIG. 2

# FIG. 3

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-3 855 006 (M.R.KEGELMAN) <br><br> *Claims 1,3; column 2, lines 5-41,58-66; figure* | 1,2,3,4 | H 01 M 2/12 |
| A | BE-A- 438 566 (BELL TELEPHONE MANUF. COMPANY) <br> *Figure 2; page 9, lines 7-27* | 1-4 | |
| A | US-A-2 500 632 (R.E.DRAKE) <br> *Claims 1,3; column 3, lines 5-11* | 1-4 | |
| A | US-A-1 930 578 (J.J.BARRETT) <br> *Claims 1,3,4; figure 1* | 1,4,5 | |
| A | US-A-3 168 210 (G.R.WILLIAMS) <br><br> *Figures 2,3; claim 1; column 2, lines 56-65* | | TECHNICAL FIELDS SEARCHED (Int. Cl. 3) <br><br> H 01 M 2/12 <br> H 01 G 9/12 <br> H 01 G 1/11 |
| A | US-A-3 939 011 (J.F.ZALESKI) <br><br> *Column 4, lines 55-68; figure 1; column 6, line 64 - column 7, line 15* | | |

The present search report has been drawn up for all claims

| Place of search | Date of completion of the search | Examiner |
|---|---|---|
| THE HAGUE | 08-10-1982 | D'HONDT J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82